# EUROPÄISCHE PATENTSCHRIFT

(11) **EP 1 281 110 B1**
(45) Veröffentlichungstag und Bekanntmachung des Hinweises auf die Patenterteilung: **30.06.2004**
(21) Anmeldenummer: 01938191.2
(22) Anmeldetag: 07.05.2001
(51) Int. Cl.: G05G 15/00

(54) **BETÄTIGUNGSVORRICHTUNG**
ACTUATING DEVICE
DISPOSITIF D'ACTIONNEMENT

(30) Priorität: 11.05.2000 DE 20008414 U
(43) Veröffentlichungstag der Anmeldung: 05.02.2003
(73) Patentinhaber: Cooper Cameron Corporation, Houston, Texas 77027-9109 (US)
(72) Erfinder: BIESTER, Klaus, 29342 Wienhausen (DE); LENZ, Norbert, 29229 Celle (DE)
(74) Vertreter: Grünecker, Kinkeldey, Stockmair & Schwanhäusser Anwaltssozietät
(86) Internationale Anmeldenummer: PCT/EP2001/005158
(87) Internationale Veröffentlichungsnummer: WO 2001/086371

(56) Entgegenhaltungen:
- EP-A- 0 384 607
- WO-A-98/30816
- GB-A- 2 266 942

## Beschreibung

Die Erfindung betrifft eine Betätigungsvorrichtung zur Verstellung einer entgegengesetzt zur Verstellrichtung kraftbeaufschlagten Steuereinrichtung mit den Merkmalen des Oberbegriffs des Patentanspruchs 1.

Eine solche Betätigungsvorrichtung ist aus der EP-A-0 384 607 bekannt, wobei diese zum Betätigen von Steuereinrichtungen wie Ventilen, Drosseleinrichtungen oder dergleichen, insbesondere zur Verwendung für maritime Öl- oder Gaserzeugungssysteme dient. Es ist selbstverständlich, dass diese Betätigungsvorrichtung auch für entsprechende terrestrische, schwer zugänglich oder entfernt lokalisierte entsprechende Systeme einsetzbar ist.

Bei Verstellung der Verstelleinrichtung in Gegenrichtung zur Kraftbeaufschlagung wird das Betätigungselement axial verschoben und dient beispielsweise in seiner ausgeschobenen Vorschubstellung zur Verstellung der Steuereinrichtung in Einsatzbereitschaft. Wird das Betätigungselement entgegengesetzt zur Verstellrichtung zurückbewegt, wird die Steuereinrichtung inaktiv geschaltet. Eine solche Betätigungsvorrichtung weist ein entsprechendes Gehäuse auf, um Schutz gegen Einflüsse im maritimen oder terrestrischen Einsatzbereich der Vorrichtung zu bieten.

Bei dieser vorbekannten Betätigungsvorrichtung ist es nicht möglich, von außen die Betätigungsvorrichtung im Notfall in einfacher Weise zu bedienen.

Der Erfindung liegt daher die Aufgabe zugrunde, eine Betätigungsvorrichtung der eingangs genannten Art dahingehend zu verbessern, dass im Notfall bei Ausfall beispielsweise der Energieversorgung oder bei anderen Problemen die Betätigungsvorrichtung von außerhalb des Vorrichtungsgehäuses einfach und verschleißfrei betätigt werden kann.

Diese Aufgabe wird durch die Merkmale des Anspruchs 1 gelöst.

Durch die Notbetätigungseinrichtung ist das Betätigungselement zum Verstellen der Steuereinrichtung durch Unterwassermanipulatoren oder kleine Mini-U-Boote bei maritimer Anordnung der Betätigungsvorrichtung betätigbar. Auf diese Weise kann auch bei Ausfall der Energieversorgung oder anderen Problemen der Steuereinrichtung, beispielsweise ein Ventil geöffnet werden, um mit entsprechenden instrumenten wieder Zugang zu einer Förderbohrung oder dergleichen zu erhalten. Dies ermöglicht, Bohroder Förderloch in einem solchen Notfall durch entsprechendes Verstellen der Steuereinrichtung in Sicherheitsposition zu bringen, um ohne Umweltgefährdung einen Schaden im Außenbereich beheben zu können.

Um die Vorschubeinrichtung ansonsten bei Normalbetrieb so betreiben zu können, dass die Notbetätigungseinrichtung nicht beansprucht oder verschlissen wird, ist die richtungsgeschaltete Kupplungseinrichtung zwischen Notbetätigungseinrichtung und Vorschubeinrichtung geschaltet. Verstellt in diesem Zusammenhang die Vorschubeinrichtung das axial verschiebbare Betätigungselement in Verstellrichtung, wird eine entsprechende Bewegung nicht auf die Notbetätigungseinrichtung übertragen.

Da die Rückstellung des Betätigungselementes durch die entgegengesetzt zur Verstellrichtung kraftbeaufschlagte Steuereinrichtung erfolgen soll und um gleichzeitig die Betätigungsvorrichtung einfach aufzubauen, weist die Vorschubeinrichtung zumindest einen Motor zur Drehung einer Drehspindel auf, welche mit einer im Vorrichtungsgehäuse drehbar gelagerten und die Drehspindel umgebenden Drehhülse fest verbunden ist, wobei die Drehhülse relativ zum Vorrichtungsgehäuse in einer zur Vorschubdrehrichtung der Drehspindel entgegengesetzten Richtung festlegbar ist.

Um in diesem Zusammenhang mittels der Notbetätigungseinrichtung das Betätigungselement zumindest in Verstellrichtung verschieben zu können, kann die Kupplungseinrichtung in Vorschubdrehrichtung geschaltet sein, d.h., bei Drehung der Drehspindel in Vorschubdrehrichtung entkoppelt die Kupplungseinrichtung Vorschubeinrichtung und Notbetätigungseinrichtung, während beispielsweise bei Ausfall des Motors durch die Notbetätigungseinrichtung durch entsprechenden Eingriff der Kupplungseinrichtung eine Drehung der Drehspindel in Vorschubdrehrichtung erfolgen kann.

Um in einfacher Weise die Vorschubeinrichtung relativ zur Kraftbeaufschlagung durch die Steuereinrichtung in Richtung entgegengesetzt zur Vorschubrichtung zu entlasten, kann die Drehhülse mittels einer Wickelfeder relativ zu einem mit dem Vorrichtungsgehäuse drehfest verbundenen Ringflansch entgegengesetzt zur Vorschubdrehrichtung festlegbar sein. Dadurch ist gewährleistet, dass eine Drehung der Drehspindel in Vorschubdrehrichtung ohne Behinderung durch die Wickelfeder zum Ausschieben des Betätigungselementes möglich ist. Gleichzeitig ist ein selbsttätiges Einschieben des Betätigungselementes in das Vorrichtungsgehäuse durch die Kraftbeaufschlagung der Steuereinrichtung entgegengesetzt zur Verstellrichtung durch die Wickelfeder verhindert. Eine entsprechende Belastung durch die Kraftbeaufschlagung wird vom Vorrichtungsgehäuse aufgenommen.

Um bei einem Stromausfall oder dergleichen eine selbsttätige Rückstellung des Betätigungselementes zum Schließen der Steuereinrichtung zu ermöglichen, ist der Wickelfeder eine Notlöseeinrichtung zur Rückstellung des Betätigungselementes entgegengesetzt zur Verstellrichtung zugeordnet. Ein Beispiel für eine solche Notlöseeinrichtung ist eine zwischen einer Spann- und einer Entspannstellung durch einen Spannmotor, insbesondere Schrittmotor, verdrehbare, in Richtung Entspannstellung kraftbeaufschlagte Spannhülse für die Wickelfeder, die in Spannstellung lösbar gehalten ist.

Um auch die Notauslöseeinrichtung innerhalb des Vorrichtungsgehäuses unterbringen zu können, kann der Spannmotor im Vorrichtungsgehäuse seitlich neben der Vorschubeinrichtung angeordnet sein. Spannhülse und entsprechende Wickelfeder sind im wesentlichen konzentrisch um die Drehspindel innerhalb des Gehäuses angeord net.

Solange der Spannmotor mit elektrischer Energie versorgt wird, übt er ein Haltemoment auf die Spannhülse aus, dem die Kraftbeaufschlagung der Spannhülse in Richtung Entspannstellung entgegenwirkt. Fällt die elektrische Versorgung aus oder wird di e elektrische Versorgung abgebaut, dreht sich der Spannmotor und insbesondere die Spannhülse durch die Kraftbeaufschlagung in Richtung Entspannstellung. Bei einem einfachen Ausführungsbeispiel kann zur Kraftbeaufschlagung der Spannhülse in Richtung Entspannstellung zwischen Spannhülse und Vorrichtungsgehäuse oder einem relativ zum Vorrichtungsgehäuse drehfesten Bauteil eine Rückstellfeder angeordnet sein. Es sei angemerkt, dass diese Rückstellfeder sowohl für ein Notschließen als auch für ein normales Schließen bzw. zum Rückstellen der Spannhülse zum Lösen der Wickelfeder eingesetzt werden kann.

Im einfachsten Fall kann das drehfeste Bauteil in diesem Zusammenhang ein auf ein Auslaßende des Vorrichtungsgehäuses aufsetzbarer Gehäusedeckel sein.

Um in einfacher Weise durch Unterwassermanipulatoren, kleine Mini-U-Boote oder dergleichen die Notbetätigungseinrichtung bedienen zu können, kann diese einen aus einem Innenraum des Vorrichtungsgehäuses hinausragenden, drehbar gelagerten Notzapfen aufweisen, welcher im Innenraum mit der richtungsgeschalteten Kupplungseinrichtung bewegungsverbunden ist. Der Notzapfen kann an seinem aus dem Vorrichtungsgehäuse vorstehenden Ende mit entsprechendem Querschnitt ausgebildet sein, um von einem entsprechenden Manipulator formschlüssig ergriffen zu werden.

Um die Kupplungseinrichtung in einfacher Weise mit der Vorschubeinrichtung zu koppeln, kann die richtungsgeschaltete Kupplungseinrichtung an einer gegenüberliegend zur Drehspindel aus dem Motor vorstehenden Motorwelle angeordnet sein.

Ein einfaches Ausführungsbeispiel für eine solche richtungsgeschaltete Kupplungseinrichtung kann ein Freilauf-Zahnrad mit zugeordnetem freilauf sein, welches Zahnrad mit einem am Notzapfen angeordneten Antriebszahnrad in Eingriff ist.

Um den Motor vor einer Fehlbetätigung zu schützen, kann zwischen Notzapfen und Antriebszahnrad eine Rutschkupplung ausgebildet sein. Diese verhindert die Übertragung eines zu großen Drehmoments auf den Motor.

Um gleichzeitig auch die Notlöseeinrichtung mittels des Notzapfens bzw. der Notbetätigungseinrichtung bedienen zu können, kann eine Spannmotorwelle aus dem Spannmotor gegenüberliegend zur Spannhülse vorstehen und mit dem Notzapfen bewegungsverbunden sein.

Bei einem einfachen Ausführungsbeispiel kann die Spannmotorwelle mit dem Antriebszahnrad oder dem Freilauf-Zahnrad bewegungsverbunden sein.

Damit im Normalbetrieb der Spannmotor die Notbetätigungseinrichtung nicht rückwärts antreiben kann oder muss, ist als Überlauf beispielsweise eine Überwurfmutter vorgesehen, die ein freies Ende der Spannmotorwelle mit einer Gewindespindel verbindet, an welcher ein Spannzahnrad zur Bewegungsverbindung mit dem Antriebszahnrad oder dem Freilauf-Zahnrad angeordnet ist.

Auch in diesem Fall kann dem Spannzahnrad eine Rutschkupplung zugeordnet sein, um eine Fehlbetätigung des Spannmotors zu verhindern.

Der Bewegungsspielraum der Überwurfmutter kann dabei so bestimmt sein, daß sie zwischen zwei Anschlägen an jeweils Spannmotorwelle und Gewindespindel entlang diesen im wesentlichen rotationsfrei verschiebbar ist.

Um die Gewindespindel sicher lagern zu können, kann diese an ihrem der Spannmotorwelle gegenüberliegenden Spindelende drehbar gelagert sein.

In diesem Zusammenhang kann es als vorteilhaft betrachtet werden, wenn Spindelende und/oder Notzapfen in einem mit dem Vorrichtungsgehäuse lösbar verbindbaren Motordeckel drehbar gelagert sind.

Die Lagerung kann direkt im Motordeckel oder auch in am Motordeckel lösbar befestigten Lagergehäusen für Spindelende und/oder Notzapfen erfolgen.

Um gegebenenfalls die Verdrehung von Motor oder Drehspindel und damit die Verstellung des Betätigungselementes überprüfen zu können, kann wenigstens ein Positionssensor Gewindespindel und/oder Spannmotorwelle und/oder Motorwelle zugeordnet sein.

Im folgenden werden vorteilhafte Ausführungsbeispiele der Erfindung anhand der in der Zeichnung beigefügten Figuren näher erläutert.

Es zeigen:
- Fig.1: eine Vorderansicht eines ersten Ausführungsbeispiels einer erfindungsgemäßen Betätigungsvorrichtung;
- Fig. 2: einen Schnitt entlang der Linie A-C aus Fig. 1;
- Fig. 3: eine Vorderansicht eines zweiten Ausführungsbeispiels einer erfindungsgemäßen Betätigungsvorrichtung;
- Fig. 4: einen Schnitt entlang der Linie A-C aus Fig. 3, und
- Fig. 5: einen prinzipiellen Schnitt durch eine Steuereinrichtung zur Verbindung mit einer erfindungsgemäßen Betätigungsvorrichtung.

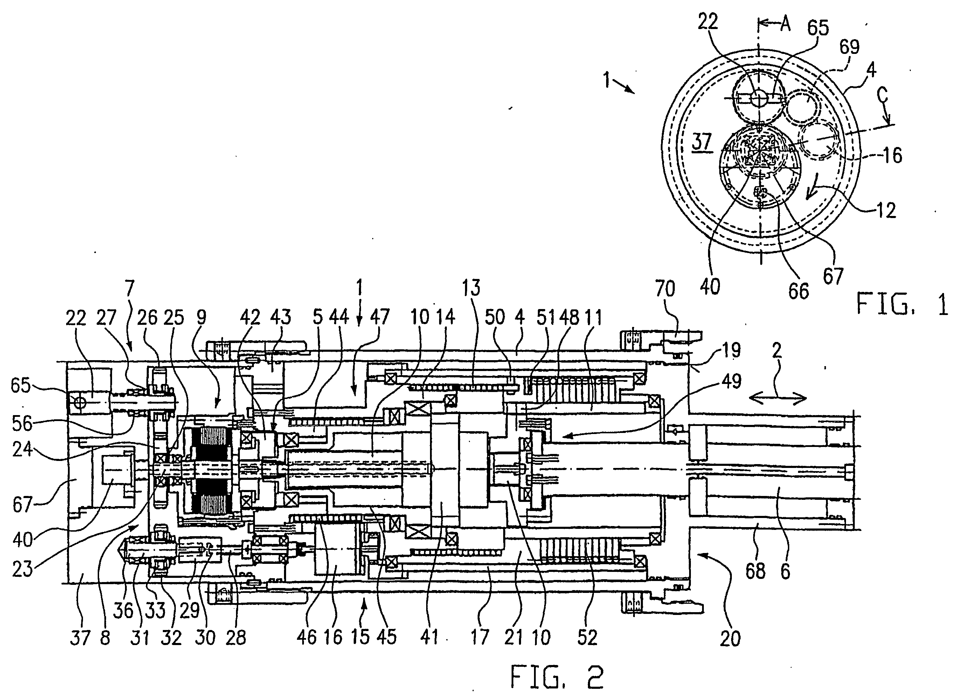

Fig. 1 zeigt eine Vorderansicht eines ersten Ausführungsbeispiels einer erfindungsgemäßen Betätigungsvorrichtung 1.

Ein Notzapfen 22 mit diametral gegenüberliegenden Stiften 65 zum Aufstecken eines von außen an die Betätigungsvorrichtung 1 herangeführten Unterwassermanipulators oder dergleichen ist in einer Vertiefung zugänglich. Unterhalb des Notzapfens 22 ist ein Positionssensor 40 angeordnet, der mit einer in Vorschubdrehrichtung 12 verdrehbaren Motorwelle 23, siehe Fig. 2, wirkungsverbunden ist. Neben dem Positionssensor 40 ist in der entsprechenden Vertiefung im Motordeckel 37, siehe nochmals Fig. 2, ein Stecker 66 zum Anschluss eines Kabels angeordnet, über den Daten der Betätigungseinrichtung 1 zuführbar und von dieser abrufbar sind.

Die Vertiefung mit dem Positionssensor 40 und dem Stecker 66 ist durch einen Deckel 67 dicht verschließbar.

Seitlich neben dem Positionssensor 40 ist im Vorrichtungsgehäuse 4 ein Spannmotor 16 einer Notlöseeinrichtung 15 angeordnet.

In Fig. 2 ist ein Schnitt entlang der Linie A-C aus Fig. 1 dargestellt.

Das Vorrichtungsgehäuse 4 ist beidseitig durch Motordeckel 37 bzw. Gehäusedeckel 20 verschlossen. Innerhalb des Vorrichtungsgehäuses 4 ist ein elektrischer Motor 9 angeordnet, der über ein Getriebe 42 eine Verbindungshülse 45 dreht. Die Verbindungshülse 45 erstreckt sich vom Getriebe 42 bis zu einer Kugelmutter 41, mit der sie drehfest verbunden ist. Innerhalb der Kugelmutter 41 ist eine Drehspindel als Kugelumlaufspindel 10 gelagert. Bei Drehung der Kugelmutter 41 über Verbindungshülse 45 ist die Drehspindel 10 in Fig. 2 achsial verschiebbar. An ihrem dem Motor 9 gegenüberliegenden Ende ist die Kugelspindel 10 mit einem Spindelkopf 49 versehen, der in Längsschlitzen einer Drehhülse 11 mittels radial abstehender Führungsfahnen 48 verschiebbar ist. Der Spindelkopf 49 weist weiterhin eine Drehhalterung auf, die gegenüber der Drehspindel 10 drehbar und mit einem Betätigungselement 6 verbunden ist.

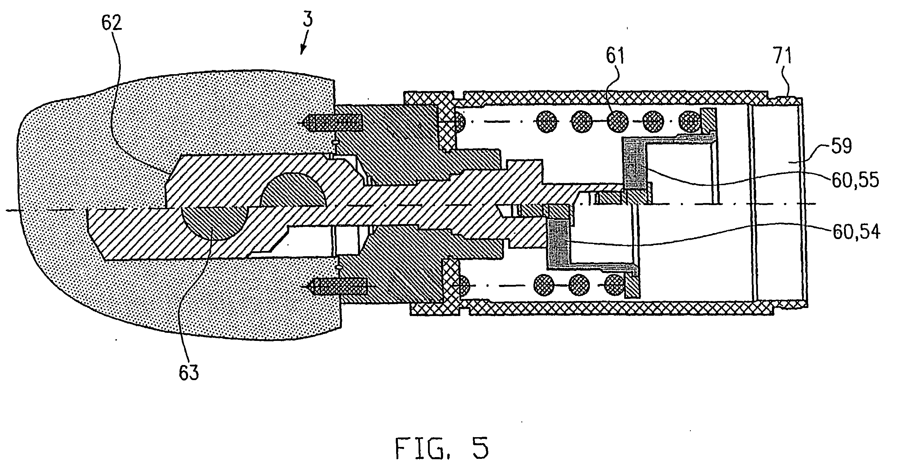

Das Betätigungselement 6 ist in etwa stabförmig und erstreckt sich aus einem Auslassende 19 des Vorrichtungsgehäuses 4 in dem Gehäusedeckel 20. Dieser weist zur Führung des Betätigungselementes 6 in Richtung einer Steuereinrichtung 3, siehe Fig. 5, eine nach außen von der Betätigungseinrichtung 1 vorstehende Führungshülse 68 auf. In dieser ist das Betätigungselement 6 durch entsprechende Dichtungen an beiden Enden der Führungshülse 68 abgedichtet gelagert.

Die Drehspindel 10 ist im Bereich des Spindelkopfes 49 von der Drehhülse 11 umgeben. Diese ist relativ zu einer Mantelhülse 47 über entsprechende Lager drehbar gelagert. Die Mantelhülse 47 ist an dem der Drehhülse 11 gegenüberliegenden Ende an einer Ringscheibe 43 lösbar und drehfest befestigt. An ihrem der Drehhülse 11 zuweisenden Ende weist die Mantelhülse 47 einen Ringflansch 14 auf, um den und um das diesem zugeordnete Ende der Drehhülse 11 eine Wickelfeder 13 gewickelt ist. Diese Wickelfeder verhindert in ihrem Spannzustand eine Relativdrehung zwischen Mantelhülse 47 und Drehhülse 11 in entsprechender Richtung.

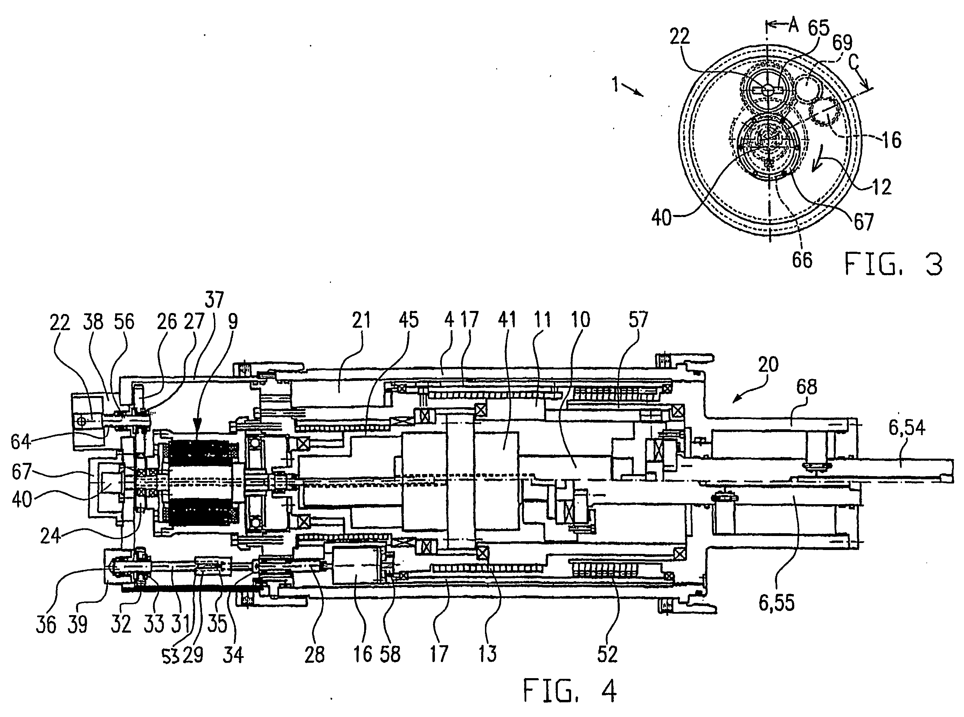

Um Ringflansch 14 und Drehhülse 11 ist eine Spannhülse 17 angeordnet. Diese ist an einem ihrer Enden am Gehäusedeckel 20 und an ihrem anderen Ende an einer Außenseite des Ringflansches 14 drehbar gelagert. Die Spannhülse 17 weist an ihrem dem Ringflansch 14 zuweisenden Ende eine Innenverzahnung auf, mit der ein Zahnrad 58, siehe Fig. 4, in Eingriff ist. Das Zahnrad 58 ist durch einen Spannmotor 16 drehbar, welcher seitlich neben der aus Motor 9, Verbindungshülse 45, Kugelmutter 41 und Drehspindel 10 gebildeten Vorschubeinrichtung 5 angeordnet ist. Die Spannhülse 17 ist über entsprechende Mitnehmereinrichtungen 50, 51, mit der Wickelfeder 13 bzw. einer Rückstellfeder 52 verbunden. Durch die Mitnehmereinrichtung 50 ist bei Drehung der Spannhülse 17 die Wickelfeder 13 in ihre Mantelhülse 47 und Drehhülse 11 drehfest miteinander verbindende Spannstellung bringbar. Durch die Mitnehmereinrichtung 51 ist gleichzeitig durch Drehung der Spannhülse 17 die Rückstellfeder 52 als Torsionsfeder so vorspannbar, dass sie die Spannhülse 17 in einer Drehrichtung umgekehrt zur durch den Spannmotor 16 übertragenen Drehung kraftbeaufschlagt.

Spannmotor 16, Zahnrad 58, Spannhülse 17, Wickelfeder 13 und Rückstellfeder 52 bilden eine Notlöseeinrichtung 15 für die Betätigungsvorrichtung 1.

Eine weitere Wickelfeder 46 ist zwischen einem Ringfortsatz 44 der Ringscheibe 43 und einer Außenseite der Verbindungshülse 45 angeordnet. Diese Wickelfeder überträgt ein von der Steuereinrichtung 3 auf das Betätigungselement 6 ausgeübtes Rückstellmoment direkt auf das Vorrichtungsgehäuse 4.

Sowohl Motor 9 als auch Spannmotor 16 weisen jeweils gegenüberliegend zur Drehspindel 10 bzw. zum Zahnrad 58 eine Motorwelle 23 bzw. eine Spannmotorwelle 28 auf. An der Motorwelle 23 ist ein Zahnrad 24 als Freilauf-Zahnrad mit zugeordnetem Freilauf 25 angeordnet. Dadurch ist eine richtungsgeschaltete Kupplungseinrichtung 8 gebildet. Das Freilauf-Zahnrad 24 ist mit einem Antriebszahnrad 26 in Eingriff. Das Antriebszahnrad 26 ist an einem Ende des Notzapfens 22 angeordnet, wobei zwischen diesen eine Rutschkupplung 27 vorgesehen ist. Der Notzapfen 22 ist über Lager 56 im Motordeckel 37 drehbar gelagert und gleichzeitig in diesem mittels Dichtungen 56 abgedichtet, so dass ein Innenraum 21 des Vorrichtungsgehäuses 4 gegenüber der maritimen oder terrestrischen Umgebung der Betätigungsvorrichtung 1 geschützt ist.

Die Motorwelle 23 setzt sich bis zum Positionssensor 40 fort, der entsprechend Drehungen der Motorwelle 23 misst.

Die Spannmotorwelle 28 ist mit ihrem freien Ende 30 in einer Überwurfmutter 29 angeordnet. Diese weist an ihrem der Spannmotorwelle 28 gegenüberliegenden Seite wenigstens einen in Längsrichtung verlaufenden Schlitz 53 auf, in dem ein Radialstift geführt ist, welcher radial von einer Gewindespindel 31 absteht. Die Gewindespindel ist an ihrem der Überwurfmutter 29 gegenüberliegenden Spindelende 36 im Motordeckel 37 drehbar gelagert. An der Gewindespindel 31 ist ein Spannzahnrad 32 angeordnet. Zwischen Gewindespindel 31 und Spannzahnrad 32 ist eine Rutschkupplung 33 vorgesehen. Das Spannzahnrad 32 ist über ein Zwischenzahnrad 69, siehe beispielsweise Fig. 1 oder Fig. 3, mit dem Antriebszahnrad 26 bewegungsverbunden.

Die Überwurfmutter 29 ist je nach Drehrichtung von Gewindespindel 31 bzw. Spannmotorwelle 28 zwischen Anschlägen 34 und 35, siehe Fig. 4 verstellbar. Der Anschlag 34 ist an der Spannmotorwelle 28 angeordnet. Der Anschlag 35 ist durch ein Ende des Schlitzes 53 gebildet. Der Abstand der Anschläge 34 und 35 ist kleiner als die Länge des Schlitzes 53.

Durch Notzapfen 22, Antriebszahnrad 26, Freilauf-Zahnrad 24, Spannzahnrad 32, Gewindespindel 31, Überwurfmutter 29 und Spannmotorwelle 28 ist eine Notbetätigungseinrichtung 7 gebildet, durch die bei Ausfall der Energieversorgung des Motors 9 bzw. Spannmotors 16 oder bei anderen Problemen zur Normalbetätigung der Betätigungseinrichtung 1 das Betätigungselement 6 in Verstellrichtung 2 verschiebbar ist.

In Fig. 3 ist eine Vorderansicht eines weiteren Ausführungsbeispiels einer erfindungsgemäßen Betätigungsvorrichtung 1 dargestellt. Bei dieser Figur wie auch den folgenden Figuren sind gleiche Teile mit gleichen Bezugszeichen versehen und zur weitergehenden Beschreibung dieser Teile wird auf die Fig. 1 und 2 verwiesen.

In Fig. 4 ist ein Schnitt entlang der Linie A-C aus Fig. 3 dargestellt.

In Fig. 4 ist insbesondere das Betätigungselement in der oberen Hälfte in Ausschubstellung 54 und in der unteren Hälfte in Einziehstellung 55 dargestellt. In Ausschubstellung 54 ist die Rückstellfeder 52 gespannt und übt ein Rückdrehmoment auf die Spannhülse 17 aus. Beim zweiten Ausführungsbeispiel weist der Gehäusedeckel 20 eine in den Innenraum 21 des Vorrichtungsgehäuses 4 vorstehende Einsteckhülse 57 auf. Um diese herum ist die Rückstellfeder 52 angeordnet.

Im dem Gehäusedeckel 20 gegenüberliegenden Motordeckel 37 sind Lagergehäuse 38, 39 angeordnet, in denen der Notzapfen 22 bzw. Spindelende 36 der Gewindespindel 31 drehbar gelagert sind. Die Lagergehäuse 38, 39 stehen nach außen in Längsrichtung über den Motordeckel 37 vor. Eine entsprechende Dichtung 64 für den Notzapfen 22 ist ebenfalls im Lagergehäuse 38 angeordnet.

In Fig. 5 ist ein Längsschnitt durch eine Steuereinrichtung 3 dargestellt, die durch die Betätigungsvorrichtungen 1 nach Fig. 2 und 4 betätigbar ist. Die Steuereinrichtung 3 weist in Fig. 5 auf der rechten Seite ein Verbindungsende 59 auf, in das die Führungshülse 68 des Gehäusedeckels 20 einsetzbar ist Entsprechende Befestigungseinrichtungen 70, siehe Fig. 2 und 4, dienen zur lösbaren Befestigung der Betätigungseinrichtung 1 an einem Außenumfang 71 des Verbindungsendes 59.

Die Steuereinrichtung 3 ist bei dem dargestellten Ausführungsbeispiel mit einem Schieber 62 ausgebildet, der eine im wesentlichen kreisförmige Schieberöffnung 63 aufweist. In der oberen Hälfte in Fig. 5 ist der Schieber 62 in einer der Einziehstellung 55 des Betätigungselementes 6 und in der unteren Hälfte nach Fig. 5 in einer der Ausschubstellung 54 des Betätigungselementes 6 entsprechenden Stellung angeordnet. In der Ausschubstellung 54 des Betätigungselementes 6 ist der Schieber in seiner Öffnungsstellung und entsprechend in der Einziehstellung 55 in seiner Schließstellung.

Der Schieber 62 ist an seinem der Schieberöffnung 63 gegenüberliegenden Ende mit einem Aufnahmetopf 60 versehen, mit dessen Boden das Betätigungselement 6 in Anlage und dort lösbar befestigt ist. Der Aufnahmetopf 60 ist in Fig. 5 in den der Ausschubstellung 54 bzw. Einziehstellung 55 entsprechenden Stellungen des Betätigungselementes 6 dargestellt. Um den Aufnahmetopf 60 herum ist eine Rückstellfeder 61 angeordnet, die den Aufnahmetopf 60 in Richtung Einziehstellung 55 des Betätigungselementes 6 kraftbeaufschlagt.

Im folgenden wird die Funktion der erfindungsgemäßen Betätigungsvorrichtung anhand der Figuren kurz erläutert.

Im Normalbetrieb wird das Betätigungselement 6 in Verstellrichtung 2 durch Betrieb des Motors 9 verschoben, wobei die Drehung des Motors 9 über Verbindungshülse 45 und Kugelmutter 41 auf die Drehspindel 10 übertragen und in eine Axialbewegung umgewandelt wird. Diese Bewegung der Drehspindel 10 führt zu einer Verschiebung des Betätigungselementes 6 entlang der Führungsschlitze in der Drehhülse 11 bis zur Ausschubstellung 54. Bei dieser Normalbetätigung der Betätigungsvorrichtung 1 sind vorher oder gleichzeitig durch Drehen der Spannhülse 17 durch den Spannmotor 16 Mittelfeder 13 und Rückstellfeder 52 mittels Mitnehmereinrichtungen 50, 51 gespannt. Dadurch ist die Drehhülse 11 relativ zum Vorrichtungsgehäuse 4 drehfest gehalten.

Bei Drehung des Motors 9 ist durch die richtungsgeschaltete Kupplungseinrichtung 8 eine gleichzeitige Mitdrehung des Notzapfens 22 unterbunden. Dadurch wird das Betriebsmoment des Motors erheblich reduziert und gleichzeitig werden die Dichtungen 64 am Notzapfen in keiner Weise beansprucht oder gar verschlissen. Das heißt, der Freilauf des Zahnrades 24 ist so angeordnet, dass es sich beim normalen Öffnen des Schiebers 62 nicht mitdreht.

Ein Schließen des Schiebers und entsprechend ein Verschieben des Betätigungselementes 6 in Einziehstellung 55 erfolgt mittels der Rückstellkraft der Rückstellfeder 61 der Steuereinrichtung 3. Dazu wird vorher ein Haltemoment des Spannmotors 16 abgebaut, so dass durch die Rückstellkraft der Rückstellfeder 52 die Spannhülse 17 zum Lösen der Wickelfeder 13 zurückgedreht wird. Anschließend kann das Betätigungselement 6 durch den Druck der Rückstellfeder 61 in das Vorrichtungsgehäuse 4 eingeschoben werden, wobei sich die Drehspindel 10 zusammen mit der Drehhülse 11 bis in ihre beispielsweise in Fig. 2 dargestellte Stellung in der Kugelmutter 41 zurückdrehen kann. Dabei dreht der Motor 9 sich nicht, da die Rückstellung des Betätigungselementes 6 bei feststehender Kugelmutter 41 durch eine sich drehende Drehspindel 10 erfolgt.

Dies bedeutet erfindungsgemäß, dass die Notbetätigungseinrichtung 7 und deren Bauteile im Normalbetrieb ohne weitere konstruktive Maßnahmen im Ruhezustand verbleiben und in keiner Weise bewegt werden.

Soll im Notfall der Schieber durch die Notbetätigungseinrichtung 7 geöffnet werden, so wird der Notzapfen 22 in entsprechender Richtung gedreht, wobei in diesem Fall das Freilauf-Zahnrad 24 über den Freilauf 25 den Motor 9 mitdreht und in der ansonsten obenbeschriebenen Weise das Betätigungselement 6 in die Ausschubstellung 54 verschiebt. Dabei ist der Motor 9 gegen eine zu große Krafteinwirkung durch die Rutschkupplung 27 am Antriebszahnrad 26 geschützt.

Gleichzeitig wird über Zwischenzahnrad 69 und Spannzahnrad 32 der Spannmotor 16 zum Aktivschalten der Notlöseeinrichtung 15 betätigt. Dabei ist die Notlöseeinrichtung 15 so ausgelegt, dass bereits nach einigen hundert Umdrehungen von Spannmotorwelle 28 Wickelfeder 13 und Rückstellfeder 52 gespannt sind und dann mittels der Rutschkupplung 33 eine weitere Übertragung von Drehmoment auf den Spannmotor 16 unterbunden ist.

Damit ist erfindungsgemäß auch mittels der Notbetätigungseinrichtung 7 die volle Sicherheit gegeben und die Notlöseeinrichtung 15 aktiv geschaltet. Da der Motor 9 und entsprechend Drehspindel 10 bzw. Kugelmutter 41 mehrere 1000 Umdrehungen zum vollständigen Öffnen des Schiebers benötigen, ist die Notlöseeinrichtung 15 bereits vor einem Öffnen des Schiebers voll einsatzbereit.

Durch die Überwurfmutter 29 ist weiterhin sichergestellt, dass im Normalbetrieb der Spannmotor 16 die Notbetätigungseinrichtung 7 nicht drehen kann oder muss. Dies ist möglich, da der Spannmotor 16 nur wenig dreht und die Überwurfmutter 29 zwischen ihren entsprechenden Anschlägen, siehe Fig. 4, genügend Spiel hat.

Um den Schieber mittels der Betätigungseinrichtung 1 im Notfall zu schließen, wird der Notzapfen 22 in Gegenrichtung gedreht. Es sind nur wenige Umdrehungen nötig, damit die Notlöseeinrichtung 15 ausgelöst wird. Diese arbeitet dann in der bereits obenbeschriebenen Weise, ohne dass in diesem Fall der Motor 9 mitgedreht wird, da in diesem Fall wieder der Freilauf aktiviert ist.

## Patentansprüche

1. Betätigungsvorrichtung (1) zur Verstellung einer entgegengesetzt zur Verstellrichtung (2) kraftbeaufschlagten Steuereinrichtung (3), wobei die Betätigungsvorrichtung (1) ein in einem Vorrichtungsgehäuse (4) durch eine Vorschubeinrichtung (6) zumindest in Verstellrichtung (2) axial verschiebbares Betätigungselement (7) aufweist,
**dadurch gekennzeichnet,**
**dass** die Betätigungsvorrichtung (1) eine von außerhalb des Vorrichtungsgehäuses (4) betätigbare Notbetätigungseinrichtung (7) aufweist, welche mit der Vorschubeinrichtung (5) über eine richtungsgeschaltete Kupplungseinrichtung (8) bewegungsverbunden ist, wobei die Vorschubeinrichtung (5) zumindest einen Motor (9) zur Drehung einer Drehspindel (10) aufweist, welche mit einer im Vorrichtungsgehäuse (4) drehbar gelagerten und die Drehspindel (10) umgebenden Drehhülse (11) drehfest verbunden ist, wobei die Drehhülse (11) relativ zum Vorrichtungsgehäuse (4) in einer zur Vorschubdrehrichtung (12) der Drehspindel entgegengesetzten Richtung festlegbar ist.

2. Betätigungsvorrichtung nach Anspruch 1, **dadurch gekennzeichnet, dass** die Kupplungseinrichtung (8) in Vorschubdrehrichtung (12) richtungsgeschaltet ist.

3. Betätigungsvorrichtung nach Anspruch 1 oder 2, **dadurch gekennzeichnet, dass** die Drehhülse (11) mittels einer Wickelfeder (13) relativ zu einem mit dem Vorrichtungsgehäuse (4) drehfest verbundenen Ringflansch (14) entgegengesetzt zur Vorschubdrehrichtung (12) festlegbar ist.

4. Betätigungsvorrichtung nach Anspruch 3, wobei der Wickelfeder (13) eine Notlöseeinrichtung (15) zur Rückstellung des Betätigungselementes (6) entgegengesetzt zur Verstellrichtung (2) zugeordnet ist, **dadurch gekennzeichnet, dass** die Notiöseeinrichtung eine zwischen einer Spann- und Entspannstellung durch einen Spannmotor (16), insbesondere Schrittmotor, verdrehbare, in Richtung Entspannstellung kraftbeaufschlagte Spannhülse (17) für die Wickelfeder (13) aufweist, die in Spannstellung lösbar haltbar ist.

5. Betätigungsvorrichtung nach Anspruch 4, **dadurch gekennzeichnet, dass** der Spannmotor (16) im Vorrichtungsgehäuse (4) seitlich neben der Vorschubeinrichtung (5) angeordnet ist.

6. Betätigungsvorrichtung nach Anspruch 4 oder 5, **dadurch gekennzeichnet, dass** eine Rückstellfeder (18) zur Kraftbeaufschlagung der Spannhülse (17) in Richtung Entspannstellung zwischen Spannhülse (17) und Vorrichtungsgehäuse (4) oder einem relativ zum Vorrichtungsgehäuse drehfesten Bauteil (20) angeordnet ist.

7. Betätigungsvorrichtung nach Anspruch 6, **dadurch gekennzeichnet, dass** das drehfeste Bauteil ein auf ein Auslassende (19) des Vorrichtungsgehäuses (4) aufsetzbarer Gehäusedeckel (20) ist.

8. Betätigungsvorrichtung nach wenigstens einem der vorangehenden Ansprüche, **dadurch gekennzeichnet, dass** die Notbetätigungseinrichtung (7) einen aus einem Innenraum (21) des Vorrichtungsgehäuses (4) hinausragenden, drehbar gelagerten Notzapfen (22) aufweist, welcher im Innenraum (21) mit der richtungsgeschalteten Kupplungseinrichtung (8) bewegungsverbunden ist.

9. Betätigungsvorrichtung nach wenigstens einem der vorangehenden Ansprüche, **dadurch gekennzeichnet, dass** die richtungsgeschaltete Kupplungseinrichtung (8) an einer gegenüberliegend zur Drehspindel (10) aus dem Motor (9) vorstehenden Motorwelle (23) angeordnet ist.

10. Betätigungsvorrichtung nach wenigstens einem der vorangehenden Ansprüche, **dadurch gekennzeichnet, dass** die richtungsgeschaltete Kupplungseinrichtung (8) ein Freilauf-Zahnrad (24) mit zugeordnetem Freilauf (25) ist, welches Zahnrad mit einem am Notzapfen (22) angeordneten Antriebszahnrad (26) in Eingriff ist.

11. Betätigungsvorrichtung nach wenigstens einem der vorangehenden Ansprüche 8 - 10, **dadurch gekennzeichnet, dass** zwischen Notzapfen (22) und Antriebszahnrad (26) eine Rutschkupplung (27) ausgebildet ist.

12. Betätigungsvorrichtung nach wenigstens einem der vorangehenden Ansprüche 4 - 11, **dadurch gekennzeichnet, dass** eine Spannmotorwelle (28) aus dem Spannmotor (16) gegenüberliegend zur Spannhülse (17) vorsteht und mit dem Notzapfen (22) bewegungsverbunden ist.

13. Betätigungsvorrichtung nach Anspruch 12, **dadurch gekennzeichnet, dass** die Spannmotorwelle (28) mit dem Antriebszahnrad (26) oder dem Freilauf-Zahnrad (24) bewegungsverbunden ist.

14. Betätigungsvorrichtung nach Anspruch 12 oder 13, **dadurch gekennzeichnet, dass** eine Überwurfmutter (29) ein freies Ende (30) der Spannmotorwelle (28) mit einer Gewindespindel (31) verbindet, an welcher ein Spannzahnrad (32) zur Bewegungsverbindung von Spannmotorwelle (28) und Antriebszahnrad (26) oder Freilauf-Zahnrad (24) angeordnet ist.

15. Betätigungsvorrichtung nach Anspruch 14, **dadurch gekennzeichnet, dass** dem Spannzahnrad (32) eine Rutschkupplung (33) zugeordnet ist.

16. Betätigungsvorrichtung nach Anspruch 14 oder 15, **dadurch gekennzeichnet, dass** die Überwurfmutter (29) zwischen zwei Anschlägen (34, 35) an jeweils Spannmotorwelle (28) und Gewindespindel (31) entlang diesen im wesentlichen rotationsfrei verschiebbar ist.

17. Betätigungsvorrichtung nach einem der vorangehenden Ansprüche 14 - 16, **dadurch gekennzeichnet, dass** die Gewindespindel (31) an ihrem der Spannmotorwelle (28) gegenüberliegenden Spindelende (36) drehbar gelagert ist.

18. Betätigungsvorrichtung nach Anspruch 17, **dadurch gekennzeichnet, dass** Spindelende (36) und/oder Notzapfen (22) in einem mit dem Vorrichtungsgehäuse (4) lösbar verbindbaren Motordeckel (37) drehbar gelagert sind.

19. Betätigungsvorrichtung nach Anspruch 17 oder 18, **dadurch gekennzeichnet, dass** zur Lagerung von Spindelende (36) und/oder Notzapfen (22) am Motordeckel (37) wenigstens ein Lagergehäuse (38, 39) lösbar befestigt sind.

20. Betätigungsvorrichtung nach einem der vorangehenden Ansprüche 9 - 19, **dadurch gekennzeichnet, dass** wenigstens ein Positionssensor (40) Gewindespindel (31) und/oder Spannmotorwelle (28) und/oder Motorwelle (23) zugeordnet ist.

## Claims

1. Actuating device (1) for adjusting a control device (3) exposed to force opposite to the adjusting direction (2), wherein the actuating device (1) has an actuating element (7) which can be axially displaced at least in adjusting direction (2) in a device housing (4) by an advancing device (6), **characterised in that** the actuating device (1) has an emergency actuating device (7) which can be actuated from outside the device housing (4) and which is movement-connected to the advancing device (5) via a direction-connected coupling device (8), wherein the advancing device (5) has at least one motor (9) for rotation of a rotating spindle (10), which is connected to be resistant to rotation to a rotary sleeve (11) rotatably mounted in the device housing (4) and surrounding the rotating spindle (10), wherein the rotary sleeve (11) can be fixed relative to the device housing (4) in a direction opposite to the advancing rotary direction (12) of the rotating spindle.

2. Actuating device according to claim 1, **characterised in that** the coupling device (8) is direction-corinected in advancing rotary direction (12).

3. Actuating device according to claim 1 or 2, **characterised in that** the rotary sleeve (11) can be fixed by means of a volute buffer spring (13) relative to an annular flange (14) connected to be resistant to rotation to the device housing (4) opposite to the advancing rotary direction (12).

4. Actuating device according to claim 3, wherein an emergency release device (15) is assigned to the volute buffer spring (13) to return the actuating element (6) opposite to the adjusting direction (2), **characterised in that** the emergency release device has a rotatable clamping sleeve (17) exposed to force in the direction of the relieving position between a clamping and relieving position by a clamping motor (16), in particular stepping motor, for the volute buffer spring (13) which can be held releasably in clamping position.

5. Actuating device according to claim 4, **characterised in that** the clamping motor (16) is arranged in the device housing (4) laterally next to the advancing device (5).

6. Actuating device according to claim 4 or 5, **characterised in that** a return spring (18) for force-exposure of the clamping sleeve (17) in the direction of the tension relief position is arranged between clamping sleeve (17) and device housing (4) or a component (20) which is resistant to rotation relative to the device housing.

7. Actuating device according to claim 6, **characterised in that** the rotation-resistant component is a housing cover (20) which can be placed on an outlet end (19) of the device housing (4).

8. Actuating device according to at least one of the preceding claims, **characterised in that** the emergency actuating device (7) has a rotatably mounted emergency pin (22) projecting from an interior (21) of the device housing (4), and which is movement-connected to the direction-connected coupling device (8) in the interior (21).

9. Actuating device according to at least one of the preceding claims, **characterised in that** the direction-connected coupling device (8) is arranged on a motor shaft (23) projecting from the motor (9) opposite the rotating spindle (10).

10. Actuating device according to at least one of the preceding claims, **characterised in that** the direction-connected coupling device (8) is a free-wheeling gear (24) with assigned free-wheeling (25), which gear engages with a drive gear (26) arranged on the emergency pin (22).

11. Actuating device according to at least one of the preceding claims 8-10, **characterised in that** a slipping clutch (27) is formed between emergency pin (22) and drive gear (26).

12. Actuating device according to at least one of the preceding claims 4-11, **characterised in that** a clamping motor shaft (28) projects from the clamping motor (16) opposite the clamping sleeve (17) and is movement-connected to the emergency pin (22).

13. Actuating device according to claim 12, **characterised in that** the clamping motor shaft (28) is movement-connected to the drive gear (26) or the free-wheeling gear (24).

14. Actuating device according to claim 12 or 13, **characterised in that** a union nut (29) connects a free end (30) of the clamping motor shaft (28) to a threaded spindle (31), on which a clamping gear (32) is arranged for movement connection of clamping motor shaft (28) and drive gear (26) or free-wheeling gear (24).,

15. Actuating device according to claim 14, **characterised in that** a slipping clutch (33) is assigned to the clamping gear (32).

16. Actuating device according to claim 14 or 15, **characterised in that** the union nut (29) can be displaced to be essentially rotation-free between two stops (34, 35) on in each case clamping motor shaft (28) and threaded spindle (31) along the latter.

17. Actuating device according to one of the preceding claims 14-16, **characterised in that** the threaded spindle (31) is rotatably mounted on its spindle end (36) opposite the clamping motor shaft (28).

18. Actuating device according to claim 17, **characterised in that** spindle end (36) and/or emergency pin (22) are rotatably mounted in a motor cover (37) which can be releasably connected to the device housing (4).

19. Actuating device according to claim 17 or 18, **characterised in that** at least one bearing housing (38, 39) are releasably attached to mount spindle end (36) and/or emergency pin (22) on the motor cover (37).

20. Actuating device according to one of the preceding claims 9-19, **characterised in that** at least one position sensor (40) is assigned to threaded spindle (31) and/or clamping motor shaft (28) and/or motor shaft (23).

## Revendications

1. Dispositif d'actionnement (1) pour régler un dispositif de commande (3) chargé par une force en sens opposé de la direction de réglage (2), le dispositif d'actionnement (1) comportant un élément d'actionnement (7) déplaçable axialement dans un boîtier (4) du dispositif à l'aide d'un dispositif d'avance (6), au moins dans la direction de réglage (2), **caractérisé en ce**
**que** le dispositif d'actionnement (1) comporte un dispositif d'actionnement de secours (7) qui peut être actionné à l'extérieur du boîtier (4) du dispositif et qui est relié, en déplacement, au dispositif d'avance (5) par l'intermédiaire d'un dispositif de couplage (8) activé en fonction de la direction, le dispositif d'avance (5) comportant au moins un moteur (9) pour faire tourner une broche rotative (10), qui est reliée solidairement en rotation à une douille rotative (11) qui est montée de manière à pouvoir tourner dans le boîtier (4) du dispositif et entoure la broche rotative (10), la douille rotative (11) pouvant être fixée par rapport au boîtier (4) du dispositif dans une direction qui opposée à la direction de rotation d'avance (12) de la broche rotative.

2. Dispositif d'actionnement selon la revendication 1, **caractérisé en ce que** le dispositif de couplage (8) est commuté en fonction de la direction dans le sens de rotation d'avance (12).

3. Dispositif d'actionnement selon la revendication 1 ou 2, **caractérisé en ce que** la douille rotative (11) peut être fixée au moyen d'un ressort hélicoïdal (13) en sens opposé de la direction de rotation d'avance (12) par rapport à une bride annulaire (14) reliée solidairement en rotation au boîtier (4) du dispositif.

4. Dispositif d'actionnement selon la revendication 3, dans lequel au ressort hélicoïdal (13) est associé un dispositif de libération de secours (15) servant à ramener l'élément d'actionnement (6) en sens opposé de la direction de réglage (2), **caractérisé en ce que** le dispositif de libération de secours comporte une douille de serrage (17), qui peut tourner entre une position de serrage et une position de desserrage sous l'action d'un moteur de serrage (16), notamment un moteur pas-à-pas, et qui est chargée par une force en direction de la position de desserrage, pour le ressort hélicoïdal (13), douille qui est retenue de façon libérable dans la position de serrage.

5. Dispositif d'actionnement selon la revendication 4, **caractérisé en ce que** le moteur de serrage (16) est disposé dans le boîtier (4) du dispositif latéralement à côté du dispositif d'avance (5).

6. Dispositif d'actionnement selon la revendication 4 ou 5, **caractérisé en ce qu'**un ressort de rappel (18) est disposé, pour l'application de force de la douille de serrage (17) en direction de la position de desserrage, entre la douille de serrage (17) et le boîtier (4) du dispositif ou un composant (20) solidaire en rotation du boîtier du dispositif.

7. Dispositif d'actionnement selon la revendication 6, **caractérisé en ce que** le composant solidaire en rotation est un couvercle de boîtier (20) pouvant être monté sur une extrémité de sortie (19) du boîtier (4) du dispositif.

8. Dispositif d'actionnement selon au moins l'une des revendications précédentes, **caractérisé en ce que** le dispositif d'actionnement de secours (7) comporte un embout de secours (22), qui est monté de manière à pouvoir tourner,qui fait saillie hors d'un espace intérieur (21) du boîtier (4) du dispositif et qui est relié en déplacement, dans l'espace intérieur (21), au dispositif de couplage (8) activé en fonction de la direction.

9. Dispositif d'actionnement selon au moins l'une des revendications précédentes, **caractérisé en ce que** le dispositif de couplage (8) activé en fonction de la direction est disposé sur un arbre (23) du moteur, qui fait saillie hors du moteur (9) par rapport à la broche rotative (10).

10. Dispositif d'actionnement selon au moins l'une des revendications précédentes, **caractérisé en ce que** le dispositif de couplage (8) activé en fonction de la direction est un pignon libre (24) auquel est associé un dispositif de roue libre (25), lequel pignon engrène avec un pignon moteur (26) monté sur l'embout de secours (22).

11. Dispositif d'actionnement selon au moins l'une des revendications précédentes 8 à 10, **caractérisé en ce que** qu'un embrayage patinant (27) est formé entre l'embout de secours (22) et le pignon d'entraînement moteur (26).

12. Dispositif d'actionnement selon au moins l'une des revendications précédentes 4 à 11, **caractérisé en ce qu'**un arbre (28) du moteur de serrage fait saillie hors du moteur de serrage (13) en vis-à-vis de la douille de serrage (17) et est relié en déplacement à l'embout de secours (22).

13. Dispositif d'actionnement selon la revendication 12, **caractérisé en ce que** l'arbre (28) du moteur de serrage est relié en déplacement au pignon d'entraînement (26) ou au pignon (24) équipé du système de roue libre.

14. Dispositif d'actionnement selon la revendication 12 ou 13, **caractérisé en ce qu'**un écrou-raccord (29) relie une extrémité libre (30) de l'arbre (28) du moteur de serrage à une broche filetée (31), sur laquelle est monté un pignon de serrage (32) pour établir la liaison en mouvement de l'arbre (28) du moteur de serrage et du pignon d'entraînement (26) ou du pignon (24) équipé du système de roue libre.

15. Dispositif d'actionnement selon la revendication 14, **caractérisé en ce qu'**au pignon de serrage (32) est associé un embrayage patinant (33).

16. Dispositif d'actionnement selon la revendication 14 ou 15, **caractérisé en ce que** l'écrou-raccord (29) est déplaçable essentiellement sans rotation entre deux butées (34, 35) respectivement sur l'arbre (28) du moteur de serrage et sur la tige filetée (31) le long de ces derniers.

17. Dispositif d'actionnement selon l'une des revendications 14 à 16, **caractérisé en ce que** la broche filetée (31) est montée de manière à pouvoir tourner, sur son extrémité (36) qui est située à l'opposé de l'arbre (28) du moteur de serrage.

18. Dispositif d'actionnement selon la revendication 17, **caractérisé en ce que** l'extrémité (36) de la broche et/ou l'embout de secours (22) sont montés de manière à pouvoir tourner dans un couvercle (37) du moteur, qui peut être relié au boîtier (4) du dispositif.

19. Dispositif d'actionnement selon la revendication 17 ou 18, **caractérisé en ce que** pour le tourillonnage de l'extrémité (36) de la broche et/ou de l'embout de secours (22), au moins un boîtier de palier (38, 39) est fixé de façon amovible sur le couvercle (37) du moteur.

20. Dispositif d'actionnement selon l'une des revendications précédentes 9 à 19, **caractérisé en ce qu'**au moins un capteur de position (40) est associé à la broche filetée (31) et/ou à l'arbre (28) du moteur de serrage et/ou à l'arbre (23) du moteur.
